# EUROPÄISCHE PATENTANMELDUNG

(11) **EP 2 088 226 A1**
(43) Veröffentlichungstag der Anmeldung: **12.08.2009**
(21) Anmeldenummer: 08002102.5
(22) Anmeldetag: 05.02.2008
(51) Int. Cl.: D03C 1/14, D03C 1/16, F16H 1/14

(54) **Schaftantriebsgetriebe**

(71) Anmelder: Groz-Beckert KG, 72458 Albstadt (DE)
(72) Erfinder: Münster, Bernhard, 72469 Messstetten (DE); Binder, Bernd, 72461 Albstadt (DE)
(74) Vertreter: Rüger, Barthelt & Abel Patentanwälte

(57) **Zusammenfassung**

Ein erfindungsgemäßer Schaftantrieb (3) weist ein Winkelgetriebe auf, das als Hypoidgetriebe ausgebildet ist. Dies schafft konstruktive Freiheitsgrade und verbessert die Belastbarkeit des Schaftantriebs insbesondere hinsichtlich hoher Tourenzahlen.

## Beschreibung

Die Erfindung betrifft einen Schaftantrieb für eine Webmaschine.

Webmaschinen weisen Webschäfte auf, mit denen Kettfäden aus der Kettfadenebene heraus bewegt werden, um ein Webfach zu bilden, in das der Schussfaden eingetragen wird. Die Webschäfte werden dazu in vorgegebener Weise auf und ab bewegt. Die Bewegung wird z.B. über ein Gestänge bewirkt, das an einen Schaftantrieb angeschlossen ist. Der Schaftantrieb weist an seinem Ausgang meist mehrere Schwingen auf, an die die verschiedenen Gestänge angeschlossen sind, die zu den Schäften führen.

Wie aus dem Gebrauchsmuster DE 75 26 949 bekannt ist, werden die Schaftantriebe von einer Welle angetrieben, die auch die sonstigen Komponenten der Webmaschine antreibt. Dazu ist im Schaftantrieb häufig ein Winkelgetriebe vorgesehen, um die von einer Eingangswelle herkommende Antriebsleistung in weitere Getriebeteile des Schaftantriebs einzuleiten. Das Winkelgetriebe besteht in der Regel aus einem eingangsseitigen Ritzel und einem Tellerrad.

Durch das Winkelgetriebe ist die Position der Eingangswelle am Schaftantrieb vorgegeben. Dies führt bei den in Webmaschinen bekanntermaßen sehr beschränkten Platzverhältnissen häufig zu unerwünschten Einschränkungen hinsichtlich der Auslegung und der Anordnung der Komponenten. Das Winkelgetriebe ist außerdem einer hohen Belastung unterworfen, die sich insbesondere als schwingende Belastung darstellen kann. Dies hängt z.B. damit zusammen, dass mit dem Schaftantrieb eine hin und her gehende Bewegung erzeugt wird, im Rahmen derer die Webschäfte ständig beschleunigt und wieder abgebremst werden. Dies führt an dem Winkelgetriebe zu Drehmomentschwankungen, die bis zur Drehmomentumkehr gehen können. Entsprechend hoch ist die dynamische Belastung an den Zahnflanken des Winkelgetriebes. Dies kann zu einer Beschränkung der Arbeitsgeschwindigkeit (Tourenzahl) der Webmaschine führen.

Davon ausgehend ist es Aufgabe der Erfindung, einen verbesserten Schaftantrieb anzugeben.

Diese Aufgabe wird mit dem Schaftantrieb nach Anspruch 1 gelöst:

Der erfindungsgemäße Schaftantrieb weist eingangsseitig ein Winkelgetriebe auf, das mit einem Achsversatz versehen ist. Dieser Achsversatz bedingt, dass die Eingangswelle des Schaftantriebs und die im Schaftantrieb vorhandene weitere Welle, die die Eingangsleistung zu Kupplungen, Exzentergetrieben, Kurvenscheibengetrieben oder ähnlichen Anordnungen weiterleitet, auf unterschiedlicher Höhe angeordnet werden können. Dies führt zu größeren Freiheitsgraden bei der Konstruktion der Webmaschine.

Die Eingangswelle und die weitere Welle stehen vorzugsweise in einem rechten Winkel zueinander, wobei ihre Drehachsen einander jedoch nicht schneiden. Der Achsversatz kann z.B. positiv ausgebildet sein. Bezogen auf die Drehrichtung des abtriebsseitigen Zahnrads ist das treibende Zahnrad in Umfangsrichtung des abtriebsseitigen Zahnrads bezogen auf diejenige Position versetzt, die es einnehmen würde, wenn kein Achsversatz vorhanden wäre, d.h. sich die Drehachsen der Wellen schneiden würden. Vorzugsweise ist die Eingangswelle höher angeordnet wie die andere Welle, die das Winkelgetriebe mit dem weiteren Getriebeteil verbindet.

Durch den Achsversatz wird eine Vergrößerung des Teilkreisdurchmessers des treibenden Zahnrads erreicht. Außerdem wird der Überdeckungsgrad der Verzahnung erhöht, was eine höhere Belastbarkeit der Zahnradpaarung zur Folge hat. Zudem zeigt sich, dass insbesondere die schwingende Belastung besser ertragen wird. Im Ergebnis kann mit kleineren Zahnrädern als bisher gearbeitet und/oder die Belastung oder Arbeitsgeschwindigkeit erhöht werden.

Vorzugsweise ist das mit der Welle verbundene Zahnrad ein bogenverzahntes Tellerrad. Eingangsseitig wird als Zahnrad z.B. ein als Kegelrad ausgebildetes Ritzel oder auch ein zylindrisches Ritzel eingesetzt. In beiden Fällen ist das Winkelgetriebe ein Hypoidgetriebe. Dieses hat zwar eine etwas höhere Reibung als ein Kegelradgetriebe mit sich schneidenden Drehachsen. Jedoch wird durch die Gleitreibung zwischen den Zahnflanken ein dämpfender Schmierfilm erzeugt, der die Belastbarkeit insbesondere hinsichtlich Schlag und Stoß erhöht.

Diese Wirkungen lassen sich mit den unterschiedlichsten Verzahnungsarten von Ritzel und Tellerrad realisieren. Z.B. kann ein zylindrisches Ritzel eingesetzt werden, e das mit einem Tellerrad kämmt. Das Tellerrad weist dann eine ebene Verzahnung an einer Flachseite auf. Hinsichtlich der Drehmomentübertragung sind ähnlich gute Eigenschaften wie bei einem palloidverzahnten Kegelradgetriebe vorhanden. Jedoch sind die Herstellkosten deutlich niedriger und es wird eine niedrigere Reibung in Kauf genommen.

Durch den Einsatz der genannten Winkelgetriebe mit Achsversatz kann die in der Schaftmaschine sonst erforderliche Schwungmasse vermindert werden. Drehmomentfluktuationen müssen nicht unbedingt aus Sicht der Antriebswelle jenseits des Winkelgetriebes vollständig ausgeglichen werden, sondern können, zumindest bis zu einem gewissen Grad, auch durch das Winkelgetriebe durchgreifen. Somit kann auch das Trägheitsmoment der Antriebswelle als ausgleichende Schwungmasse mitgenutzt werden. Dies kann insbesondere dann Bedeutung haben, wenn die Untersetzung des Winkelgetriebes relativ hoch ist, beispielsweise größer als 6:1.

Der Achsversatz des Winkelgetriebes ermöglicht außerdem den Einsatz besonders robuster Getriebegehäusekonstruktionen, die beispielsweise zumindest eine der beteiligten Wellen oder beide Wellen des Winkelgetriebes zu beiden Seiten des jeweiligen Zahnrads lagern. Dies sichert die gewünschten Zahneingriffsbedingungen auch bei hohen Drehmomenten und dynamischen Lasten.

Das Winkelgetriebe und der weitere Getriebeteil sind vorzugsweise in einem gemeinsamen Getriebegehäuse angeordnet. Dort können sie vorteilhafterweise von dem gleichen Schmiermittel geschmiert werden. Die Verwendung von Hypoidölen und/oder Hochdruckölen für das Winkelgetriebe nicht zwingend erforderlich.

Weitere Einzelheiten vorteilhafter Ausführungsformen der Erfindung ergeben sich aus den Ansprüchen, der Beschreibung oder der Zeichnung. Die Beschreibung beschränkt sich auf wesentliche Aspekte der Erfindung und sonstiger Gegebenheiten. Die Zeichnung offenbart weitere Einzelheiten und ist ergänzend heranzuziehen. Es zeigen:
Figur 1 einen Webschaft mit Antriebsgestänge und Schaftantrieb in schematisierter Ansicht,
Figur 2 den Schaftantrieb nach Figur 1 mit abgenommener Haube und in einer Perspektivansicht,
Figur 3 ein Winkelgetriebe des Schaftantriebs nach Figur 2 in Seitenansicht,
Figur 4 eine alternative Ausführungsform des Schaftantriebs mit abgenommener Haube in perspektivischer Darstellung und
Figur 5 eine alternative Ausführungsform des Winkelgetriebes in Seitenansicht.

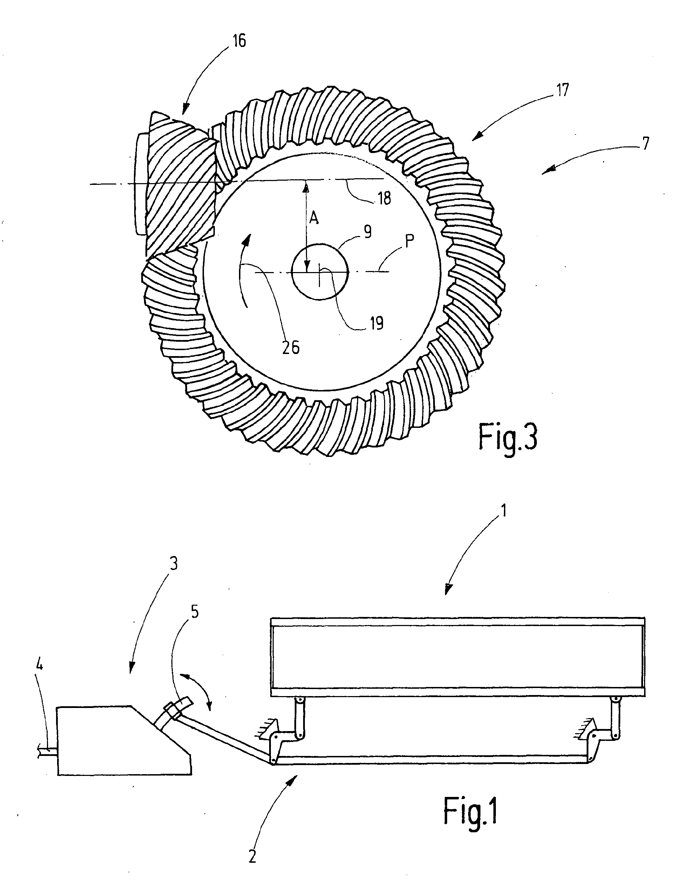

In Figur 1 ist ein Webschaft 1 veranschaulicht, der über ein Gestänge 2 von einem Schaftantrieb 3 angetrieben wird. Der Schaftantrieb 3 ist ein Getriebe, das die Drehbewegung einer Eingangswelle 4 in eine hin und her gehende Bewegung einer als Abtrieb dienenden Schwinge 5 umsetzt.

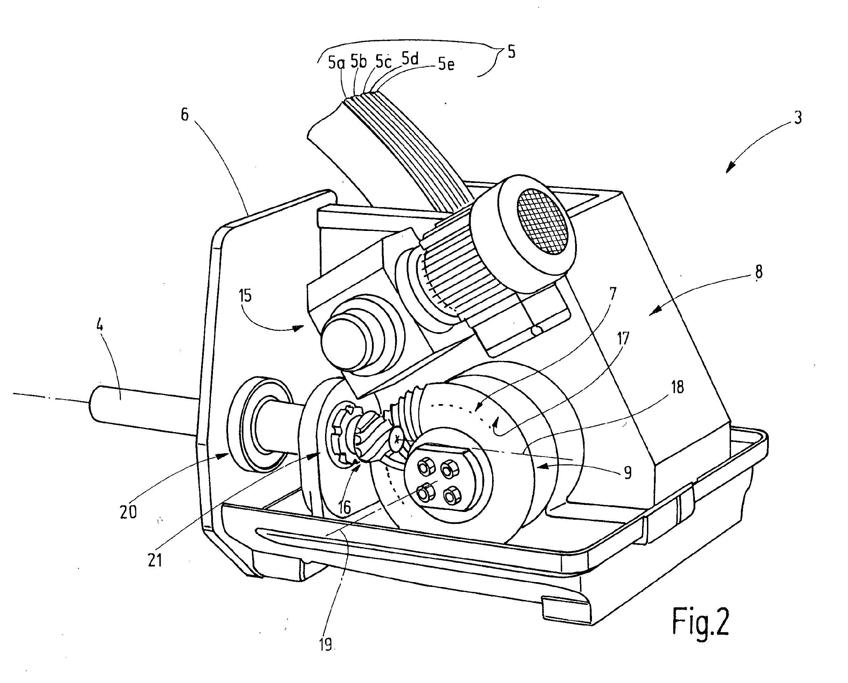

Der Schaftantrieb 3 ist in Figur 2 mit abgenommener Haube dargestellt. Er weist eine Anzahl individuell bewegter Schwingen 5a, 5b, 5c, 5d usw. auf, die aus dem Gehäuse 6 des Schaftantriebs 3 herausragen und jeweils einen Webschaft antreiben.

Der Schaftantrieb 3 enthält ein Getriebe, zu dem ein Winkelgetriebe 7 und ein weiterer Getriebeteil 8 gehören. Das Winkelgetriebe 7 und der Getriebeteil 8 sind über eine Welle 9 miteinander verbunden. Der Getriebeteil 8 setzt die drehende Bewegung der Welle 9 in eine schwingende Bewegung der Schwingen 5 um. Dies wird über einen an sich bekannten Nockentrieb (nicht dargestellt) bestehend aus Komplementärnocken und Schwinghebel realisiert. Mittels der Geometrie der Komplementärnocken werden die Bewegungsabläufe der Schwingen 5 und über das Gestänge die Bewegungen der Webschäfte 1 gesteuert.

Die Schwingen 5 können unabhängig von dem Nockentrieb, bei stehender Eingangswelle 4, mit dem Antrieb 15 bewegt werden. Z.B. können alle Schwingen eines Schaftantriebs zu Servicezwecken (Webfehler, Nockenwechsel) in eine gemeinsame Position gebracht werden. In dieser Position sind sie vom Nockentrieb beabstandet.

Das Winkelgetriebe 7 weist zwei Zahnräder 16, 17 auf. Das Zahnrad 16 ist mit der Eingangswelle 4 verbunden und bildet das Eingangszahnrad bzw. das Antriebs-Zahnrad. Das Zahnrad 17 ist mit der Welle 9 verbunden und bildet das Ausgangszahnrad. Die Welle 4 legt für das Zahnrad 16 eine Drehachse 18 fest. Die Welle 9 legt für das Zahnrad 17 eine Drehachse 19 fest. Die Wellen 4, 9 sind jeweils in geeigneten Lagerungen drehbar gelagert. In Figur 2 ist dies für die Welle 4 anhand der Lager 20, 21 ersichtlich.

Die Wellen 4, 9 sind durch die jeweiligen Lagerungen so positioniert, dass sich ihre Drehachsen 18, 19 nicht schneiden. Es ist ein Achsversatz A vorhanden, der durch den Abstand der Drehachsen 18, 19 voneinander bestimmt und aus Figur 3 ersichtlich ist. Der Achsversatz A kann zweckentsprechend gewählt werden und stellt somit im Vergleich zur Verwendung von Winkelgetrieben mit sich schneidenden Achsen einen zusätzlichen Freiheitsgrad bei der Konstruktion und Auslegung von Schaftantrieben 3 und Webmaschinen dar. Beispielsweise gestattet der Achsversatz A die Erzeugung eines erhöhten Abstands der Welle 4 von dem darunter liegenden Boden, um beispielsweise Maschinenträgern oder sonstigen Elementen mehr Raum zu gewähren. Beispielsweise ist der Achsversatz A positiv im Bezug auf die in Figur 3 durch einen Pfeil 25 angedeutete Drehrichtung des Zahnrads 17. Mit anderen Worten, das Zahnrad 16 ist gegenüber einer Linie P in Drehrichtung (Pfeil 20) versetzt. Die Linie P ist eine Parallele zu der Drehachse 18 und schneidet die Drehachse 19. Die Größe des Achsversatzes A kann zweckentsprechend gewählt werden. Vorzugsweise liegt der Achsversatz im Bereich von 10 bis 20 % des Teilkreisdurchmessers des abtriebsseitigen Zahnrads 17.

Das Winkelgetriebe 7 ist vorzugsweise ein Untersetzungsgetriebe. Zu diesem Zweck ist das Zahnrad 16 als Ritzel und das Zahnrad 17 als Tellerrad ausgebildet. Das Ritzel 16 kann beispielsweise ein Kegelrad sein, das mit einer Palloidverzahnung versehen ist. Das Ritzel 16 weist einen größeren Spiralwinkel auf als das Tellerrad 17. Das Tellerrad 17 ist mit einer passenden Bogenverzahnung versehen. Das Winkelgetriebe 7 ist ein Hypoidgetriebe.

Der insoweit beschriebene Schaftantrieb 1 arbeitet wie folgt:

In Betrieb ist die Eingangswelle 4 mit im Wesentlichen konstanter Drehzahl angetrieben. Über das Winkelgetriebe 7 wird die Drehbewegung auf die Welle 9 und mit dieser auf den Getriebeteil 8 übertragen. Dieser setzt die Drehbewegung der Welle 9 in eine schwingende Bewegung der Schwingen 5 um, die ihrerseits über das Gestänge 2 die entsprechenden Webschäfte 1 antreiben. Die Webschäfte 1 werden dabei in schnellen Bewegungen auf und ab geführt. Die entsprechenden Beschleunigungs- und Bremskräfte wirken als Zug- und Druckkräfte in dem Gestänge 2 und werden als solche von den Schwingen 5 aufgebracht. Entsprechend unterliegen das Zahnrad 17 und die Welle 9 einem zeitlich stark veränderlichen Drehmoment. Das Drehmoment kann um einen Mittelwert herum schwanken. Die Schwankungen können in schneller Folge auftreten und erheblich sein. Im Einzelfall können sie so groß sein, dass es zur Drehmomentumkehr an dem Winkelgetriebe 7 kommt.

Das Winkelgetriebe 7 wird durch Öl geschmiert, das in dem Getriebegehäuse 6 steht. Beispielsweise ist dessen unterer Teil als Ölwanne ausgebildet. Das Zahnrad 17 kann dort in Öl eintauchen und dieses bei seiner Drehung nach oben zum Verzahnungseingriff mitnehmen. In Betrieb wälzen die Zahnräder 16, 17 aneinander ab. Zusätzlich tritt eine Gleitbewegung zwischen den in Eingriff befindlichen Zähnen auf. Diese Gleitbewegung kann die Schmierverhältnisse zwischen den in Eingriff befindlichen Zähnen verbessern, indem dadurch Schmiermittel entlang der Zahnflanken gefördert wird. Es kann sich somit zwischen den in Eingriff befindlichen Zähnen ein dämpfendes Ölpolster bilden. Dieses Ölpolster kann das zwischen den Zahnrädern 16, 17 vorhandene Zahnflankenspiel zumindest teilweise überbrücken und somit bei nicht konstantem Drehmoment sowie insbesondere auch bei kurzzeitiger Drehmomentumkehr eine erhebliche dämpfende Wirkung ausüben. So werden neben konstruktiven Vorteilen durch Anwendung eines Hypoidgetriebes als Winkelgetriebe 7 zusätzliche Vorteile während des Betriebs erhalten. Das Hypoidgetriebe 7 ist zudem robuster als ein vergleichbares Kegelradgetriebe mit kreuzenden Achsen.

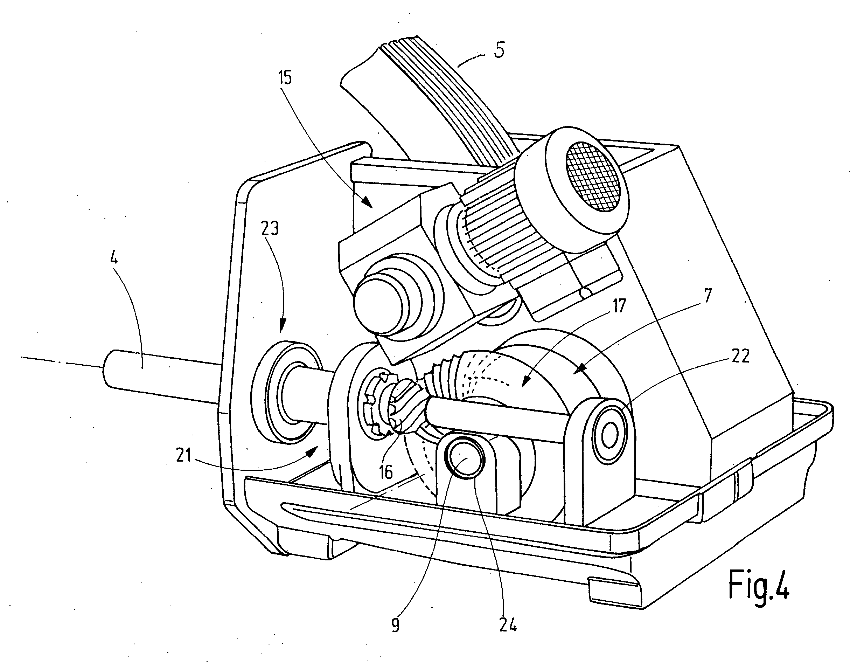

Außerdem ermöglicht es die beidseitige Lagerung zumindest einer oder auch beider der beteiligten Wellen 4, 9. Es wird dazu auf Figur 4 verwiesen. Wie ersichtlich, ist sowohl die Welle 9 als auch die Welle 4 jeweils zu beiden Seiten des Verzahnungseingriffs gelagert. Die Wellen 4, 9 überkreuzen einander, schneiden sich jedoch nicht. Die Welle 4 ist zumindest durch die Lager 21, 22 gelagert. An Stelle der Lagerung 20 kann eine einfache Dichtung 23 treten. Die Lagerung der Welle 9 wird durch zwei Lager, nämlich ein Lager 24 und ein weiteres, in Figur 4 von dem Zahnrad 17 verdecktes Lager gelagert. Durch diese Maßnahme lässt sich der Verzahnungseingriff auch bei Übertragung hoher Drehmomente und dynamischer Lasten mit leichtbauenden Getriebegehäusen bewerkstelligen.

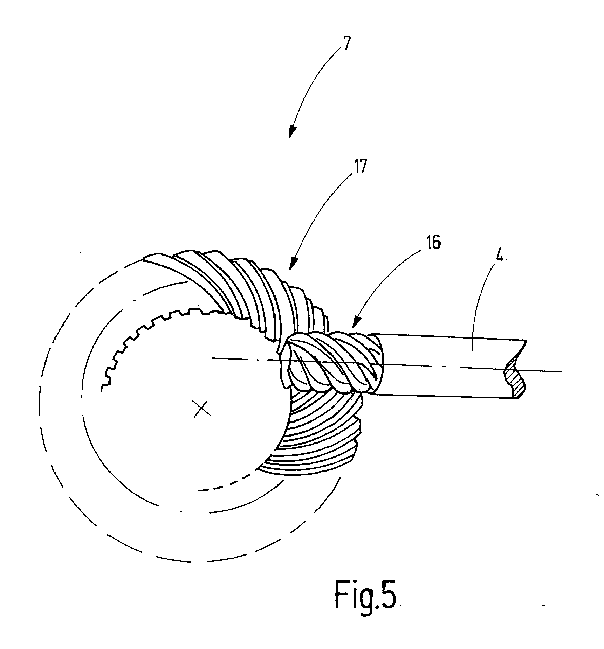

Das Hypoidgetriebe kann eine Untersetzung von 1:5, 1:10 oder mehr aufweisen. Es kann insbesondere auch als hoch untersetzendes Hypoidgetriebe ausgebildet sein, wie es Figur 5 zeigt. Das Zahnrad 16 ist als Zylinderritzel ausgebildet, das mit einer Schraubenverzahnung versehen ist. Das zugeordnete Zahnrad 17 ist ein Tellerrad mit ebener seitlich angebrachter Verzahnung in Form einer Bogenverzahnung. Dieses Winkelgetriebe 7 weist einen besonders hohen Überdeckungsgrad in der Verzahnung auf. D.h. es sind gleichzeitig jeweils sehr viele Zähne des Ritzels 16 mit Zähnen des Tellerrads 17 in Eingriff. Wiederum wird durch die Gleitbewegung zwischen den Zahnflanken hydrodynamisch ein Schmierfilm aufgebaut, der dämpfend wirkt. Vorzugsweise stehen die Zähnezahlen der Zahnräder 16, 17 bei allen Ausführungsbeispiel in einem ganzzahligen Verhältnis zueinander.

Ein erfindungsgemäßer Schaftantrieb 3 weist ein Winkelgetriebe auf, das als Hypoidgetriebe ausgebildet ist. Dies schafft konstruktive Freiheitsgrade und verbessert die Belastbarkeit des Schaftantriebs insbesondere hinsichtlich hoher Tourenzahlen.

### Bezugszeichen

- 1: Webschaft
- 2: Gestänge
- 3: Schaftantrieb
- 4: Eingangswelle
- 5: Schwinge
- 6: Gehäuse
- 7: Winkelgetriebe
- 8: Getriebeteil
- 9: Welle
- 15: Antrieb
- 16, 17: Zahnräder
- 18, 19: Drehachse
- A: Achsversatz
- P: Linie
- 20, 21, 22, 24: Lager
- 23: Dichtung
- 25: Pfeil für Drehrichtung

## Patentansprüche

1. Schaftantrieb (3) zum Antreiben mindestens eines Webschafts (1),
mit einem Getriebeteil (8) zur Umsetzung einer Drehbewegung in eine schwingende hin und her gehende Bewegung, wobei dieser Getriebeteil (8) eine drehbar gelagerte Welle (9) und eine Schwinge (5) aufweist, die einen Abtrieb des Schaftantriebs (3) bildet,
mit einem Winkelgetriebe (7), das ein mit der Welle (9) verbundenes Zahnrad (17) und ein mit einer Eingangswelle (4) verbundenes Antriebs-Zahnrad (16) aufweist, wobei die Drehachse (18) des Zahnrads (16) zur Drehachse (19) des Zahnrads (17) versetzt zueinander mit einem Achsversatz (A) angeordnet ist.

2. Schaftantrieb nach Anspruch 1, **dadurch gekennzeichnet, dass** das mit der Welle (9) verbundene Zahnrad (17) ein Tellerrad ist.

3. Schaftantrieb nach Anspruch 1, **dadurch gekennzeichnet, dass** das Antriebs-Zahnrad (16) ein als Kegelrad ausgebildetes Ritzel ist.

4. Schaftantrieb nach Anspruch 1, **dadurch gekennzeichnet, dass** das Winkelgetriebe (7) ein bogenverzahntes Getriebe ist.

5. Schaftantrieb nach Anspruch 1, **dadurch gekennzeichnet, dass** das Antriebs-Zahnrad (16) ein zylindrisches Ritzel ist.

6. Schaftantrieb nach Anspruch 5, **dadurch gekennzeichnet, dass** das Ritzel (16) schraubenverzahnt ist.

7. Schaftantrieb nach Anspruch 1, **dadurch gekennzeichnet, dass** der Achsversatz (A) positiv ist.

8. Schaftantrieb nach Anspruch 1, **dadurch gekennzeichnet, dass** das Winkelgetriebe (7) mit dem Getriebeteil (8) in einem gemeinsamen Getriebegehäuse (6) angeordnet ist.

9. Schaftantrieb nach Anspruch 1, **dadurch gekennzeichnet, dass** die mit dem Antriebs-Zahnrad (16) verbundene Welle (4) höher angeordnet ist als die Welle (9).

10. Schaftantrieb nach Anspruch 1, **dadurch gekennzeichnet, dass** wenigstens eine der die Zahnräder (16, 17) tragenden Wellen (4, 9) zu beiden Seiten des Zahneingriffs des Winkelgetriebes (7) gelagert ist.

11. Schaftantrieb nach Anspruch 1, **dadurch gekennzeichnet, dass** das Winkelgetriebe (7) und der Getriebeteil (8) von dem gleichen Schmiermittel geschmiert sind.

## Geänderte Patentansprüche

### Geänderte Patentansprüche gemäss Regel 137(2) EPÜ.

**1.** Schaftantrieb (3) zum Antreiben mindestens eines Webschafts (1),
mit einem Getriebeteil (8) zur Umsetzung einer Drehbewegung in eine schwingende hin und her gehende Bewegung, wobei dieser Getriebeteil (8) eine drehbar gelagerte Welle (9) und eine Schwinge (5) aufweist, die einen Abtrieb des Schaftantriebs (3) bildet,
mit einem Winkelgetriebe (7), das ein mit der Welle (9) verbundenes Zahnrad (17) und ein mit einer Eingangswelle (4) verbundenes Antriebs-Zahnrad (16) aufweist, wobei die Drehachse (18) des Zahnrads (16) zur Drehachse (19) des Zahnrads (17) versetzt zueinander mit einem Achsversatz (A) angeordnet ist und
wobei die mit dem Antriebs-Zahnrad (16) verbundene Welle (4) höher angeordnet ist als die Welle (9).

**2.** Schaftantrieb nach Anspruch 1, **dadurch gekennzeichnet, dass** das mit der Welle (9) verbundene Zahnrad (17) ein Tellerrad ist.

**3.** Schaftantrieb nach Anspruch 1, **dadurch gekennzeichnet, dass** das Antriebs-Zahnrad (16) ein als Kegelrad ausgebildetes Ritzel ist.

**4.** Schaftantrieb nach Anspruch 1, **dadurch gekennzeichnet, dass** das Winkelgetriebe (7) ein bogenverzahntes Getriebe ist.

**5.** Schaftantrieb nach Anspruch 1, **dadurch gekennzeichnet, dass** das Antriebs-Zahnrad (16) ein zylindrisches Ritzel ist.

**6.** Schaftantrieb nach Anspruch 5, **dadurch gekennzeichnet, dass** das Ritzel (16) schraubenverzahnt ist.

**7.** Schaftantrieb nach Anspruch 1, **dadurch gekennzeichnet, dass** der Achsversatz (A) positiv ist.

**8.** Schaftantrieb nach Anspruch 1, **dadurch gekennzeichnet, dass** das Winkelgetriebe (7) mit dem Getriebeteil (8) in einem gemeinsamen Getriebegehäuse (6) angeordnet ist.

**9.** Schaftantrieb nach Anspruch 1, **dadurch gekennzeichnet, dass** wenigstens eine der die Zahnräder (16, 17) tragenden Wellen (4, 9) zu beiden Seiten des Zahneingriffs des Winkelgetriebes (7) gelagert ist.

**10.** Schaftantrieb nach Anspruch 1, **dadurch gekennzeichnet, dass** das Winkelgetriebe (7) und der Getriebeteil (8) von dem gleichen Schmiermittel geschmiert sind.
